# EUROPÄISCHE PATENTSCHRIFT

(11) **EP 2 432 330 B1**
(45) Veröffentlichungstag und Bekanntmachung des Hinweises auf die Patenterteilung: **03.08.2016**
(21) Anmeldenummer: 10724700.9
(22) Anmeldetag: 21.05.2010
(51) Int. Cl.: A23K 50/40, B65D 75/58

(54) **TIERFUTTER**
ANIMAL FEED
ALIMENT POUR ANIMAUX

(30) Priorität: 22.05.2009 DE 102009022945; 11.07.2009 DE 102009032712
(43) Veröffentlichungstag der Anmeldung: 28.03.2012
(73) Patentinhaber: Growth Finance Plus AG, 8737 Gommiswald (CH)
(72) Erfinder: DEUERER, Helmut, 75015 Bretten (DE)
(74) Vertreter: Twelmeier Mommer & Partner
(86) Internationale Anmeldenummer: PCT/EP2010/003125
(87) Internationale Veröffentlichungsnummer: WO 2010/133376

(56) Entgegenhaltungen:
- US-A- 3 653 908
- US-A1- 2009 098 267
- Anonymous: "Purrfectly Fish from Whiskas"[Online] 30. Oktober 2007 (2007-10-30), Seite 1, XP002595625 Whiskas Gefunden im Internet: URL:http://web.archive.org/web/20071030025 336/http://www.whiskas.com/meal_time/purrf ectly_fish/pf_sardine.aspx> [gefunden am 2010-08-05]
- Anonymous: "Purrefectly Fish from Whiskas Multi-Pack"[Online] 30. Oktober 2007 (2007-10-30), Seite 1, XP002595626 Whiskas Gefunden im Internet: URL:http://web.archive.org/web/20071030025 318/www.whiskas.com/meal_time/purrfectly_f ish/pf_multi.aspx> [gefunden am 2010-08-06]
- Anonymous: "Cat Food with Poached Salmon in Sauce"[Online] 1. Oktober 2001 (2001-10-01), Seite 1, XP002595627 Mintel GNPD Gefunden im Internet: URL:http://www.gnpd.com/sinatra/gnpd/searc h_results/&s_sort=2&item_id=10094804> [gefunden am 2010-08-05]
- Anonymous: "Chunks in Gravy Extension"[Online] 1. April 2001 (2001-04-01), Seite 1, XP002595628 Mintel GNPD Gefunden im Internet: URL:http://www.gnpd.com/sinatra/gnpd/searc h_results/&s_sort=2&item_id=10084607> [gefunden am 2010-08-05]

## Beschreibung

Die Erfindung betrifft auf Basis von tierischem Gewebe, pflanzlicher Stärke und Wasser hergestelltes Tierfutter für Hunde und Katzen. Ein Tierfutter mit den im Oberbegriff des Anspruchs 1 angegebenen Merkmalen ist aus der WO 02/051443 bekannt.

Bekannt sind Nassfutter, die Fleisch- oder Fischbrocken in einer Sauce enthalten, und in Standbeuteln vertrieben werden, beispielsweise aus Whiskas:"Purrfectly Fish from Whiskas" 30. Oktober 2007, Seiten 1-1, XP002595625 Gefunden im Internet: URL:http://web.archive.org/web/20071030025336/http://www.whiskas.com/meal_tim e/purrfectly_fish/pf_sardine.aspx sowie Mintel GNPD:"Cat Food with Poached Salmon in Sauce" 1. Oktober 2001, Seiten 1-1, XP002595627 Gefunden im Internet: URL:http://www.gnpd.com/sinatra/gnpd/search_resutts/&s_sort=2&item_id=1009480 4 und Mintel GNPD:" Chunks in Gravy Extension" 1. April 2001, Seiten 1-1 XP002595628 Gefunden im Internet: URL: http:// www.gnpd.com/sinatra/gnpd/search_results/&s_sort=2&item_id=10084607.

Aus US 3 653 908 ist ein flüssiges Tierfutter bekannt, das im Wesentlichen aus Fleischbrei hergestellt wird und 35 bis 45 % Wasser enthält.

Aufgabe der vorliegenden Erfindung ist es, einen Weg aufzuzeigen, wie kostengünstig ein Tierfutter hergestellt werden kann, das für Heimtiere bekömmlich ist und Hunden und Katzen als Snack oder Belohnung angeboten werden kann.

Diese Aufgabe wird durch ein Tierfutter mit den im Anspruch 1 angegebenen Merkmalen gelöst. Vorteilhafte Weiterbildungen der Erfindung sind Gegenstand von Unteransprüchen.

Als Haustiere gehaltene Hunde und Katzen leiden häufig an Überfütterung mit den damit verbundenen gesundheitlichen Problemen. Ein erfindungsgemäßes Tierfutter auf Basis von tierischem Gewebe, pflanzlicher glutenfreier Stärke und Wasser hat wegen seines hohen Wassergehalts einen niedrigen Nährwert und kann Heimtieren deshalb als Snack oder zur Belohnung angeboten werden, ohne zu gesundheitlichen Problemen durch Überfütterung, beispielsweise Fettsucht oder Diabetes, zu führen.

Als tierisches Gewebe kann eiweißarmes Gewebe, beispielsweise Haut, Sehnen, Gedärm oder ähnliches verwendet werden. Bevorzugt werden Innereien oder Muskelfleisch, insbesondere eine Mischung aus Innereien und Muskelfleisch verwendet. Derartige tierische Nebenprodukte sind kostengünstig und haben zudem einen vorteilhaft geringen Kaloriengehalt. Das tierische Gewebe wird zur Herstellung eines erfindungsgemäßen Tierfutters püriert und mit pflanzlicher glutenfreier Stärke, Wasser und eventuellen Zusatzstoffen, beispielsweise Farb- und/oder Süßstoffen vermischt. Die Mischung wird anschließend für einige Minuten auf 90°C bis 130°C erhitzt. Dabei wird das Tierfutter sterilisiert und zudem die Stärke vorteilhaft verändert, so dass das Futter eine zähflüssige, nicht klumpende, und kurz abreisende Konsistenz, ähnlich wie Ketchup, erhält. Ein solches Tierfutter kann wegen seiner flüssigen, sämigen Konsistenz von Hunden oder Katzen aufgeleckt und auf einfache Weise verabreicht werden.

Ein erfindungsgemäßes Tierfutter hat bevorzugt einen Nährwert von weniger als 1 kcal, vorzugsweise weniger als 0,7 kcal, besonders bevorzugt weniger als 0,5 kcal, pro Gramm. Snackportionen von 10g bis 30g können deshalb auch mehrmals täglich bedenkenlos verfüttert werden, ohne dass dadurch eine Gewichtszunahme des Heimtiers zu befürchten wäre.

Der Wassergehalt des Tierfutters beträgt mindestens 80 Gew.-%, vorzugsweise mindestens 85 Gew.-%. Das Tierfutter hat einen Fettgehalt von mindestens 1 Gew.% und weniger als 5 Gew.-%, beispielsweise 2 Gew.-% bis 4 Gew.-%, besonders bevorzugt weniger als 3 Gew.-%. Der Stärkegehalt beträgt weniger als 7 Gew.-%, vorzugsweise weniger als 5 Gew.-%, der Proteingehalt 1 bis 5 Gew.-%, bevorzugt weniger als 2 Gew.-%, vorzugsweise weniger als 1 Gew.-%, insbesondere weniger als 0,5 Gew.-%.

Als Stärke wird glutenfreie Stärke verwendet, beispielsweise Maisstärke. Glutenfreie Stärke ist für Hunden und Katzen besonders bekömmlich.

Um das Aussehen des Tierfutters zu verbessern, können diesem ein oder mehrere Farbstoffe zugegeben werden. Bevorzugt wird Eisenoxid und/oder Zuckercoleur verwendet. Auf diese Weise kann das Produkt eine angenehme rote oder rotbraune Farbe erhalten.

Um den Geschmack zu verbessern, kann dem Tierfutter Süssstoff, beispielsweise Xylose zugegeben werden. Xylose ist für Hunde und Katzen praktisch nicht verdaulich, so dass dadurch der Nährwert nicht erhöht wird. Bevorzugt beträgt der Xylosegehalt 0,1 bis 1,0 Gew.-%, insbesondere 0,1 bis 0,5 Gew.-%. Alternativ oder zusätzlich kann dem Tierfutter als weiterer Süßstoff Glycin beigemischt werden. Bevorzugt beträgt der Glycingehalt 0,1 Gew.-% bis 5 Gew.-%, vorzugsweise 0,1 bis 2 Gew.-%. Zur Geschmacksverbesserung kann insbesondere auch ein Aminosäurenmix zu gemischt werden. Besonders bevorzugt sind dabei Glycin, Lysin, Methionin und Cystein.

Das Tierfutter wird in Schlauchbeuteln verpackt. Besonders vorteilhaft sind Portionsgrößen von 10 bis 30 g. Diese Menge ist ideal als Snack oder Zwischenmahlzeit für Hunde und Katzen geeignet.

Weitere Einzelheiten und Vorteile der Erfindung werden an einem Ausführungsbeispiel unter Bezugnahme auf die beigefügte Zeichnung erläutert.

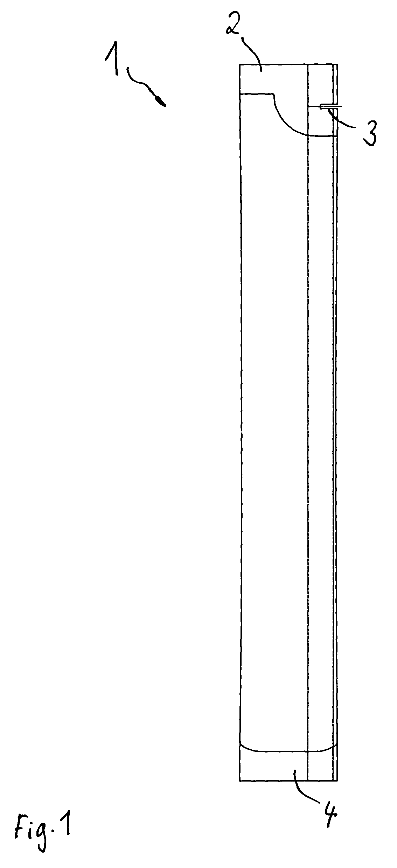

Figur 1: zeigt ein Ausführungsbeispiel eines Schlauchbeutels mit Tierfutter.

Zur Herstellung eines erfindungsgemäßen Tierfutters werden tierische Nebenprodukte, beispielsweise Muskelfleisch und Innereinen oder eiweißarmes Gewebe wie Haut, Sehnen oder Knochen, püriert und mit Maisstärke und Wasser zu einer homogenen Masse vermischt. Jeweils 100 g Wasser werden dabei etwa 5 bis 10 g tierisches Gewebe und 3 bis 5 g Maisstärke beigemischt. Zusätzlich können Farb- und/oder Süßstoffe beigemischt werden. Beispielsweise Eisenoxid und Zuckercoleur als Farbstoffe zugemischt werden, so dass das Tierfutter eine rote oder rotbraune Farbe erhält. Zusätzlich wird Xylose beigemischt, beispielsweise in einer Menge von 0,1 bis 0,5 Gew.-%.

Zur Geschmacksverbesserung werden Aminosäuren zugemischt, bevorzugt Glycin, Lysin, Methionin und/oder Cystein. Aminosäuren können als Aminosäurenmix zugemischt werden. Um das Tierfutter zu süßen kann Glycin beigemischt werden. Der Aminosäurengehalt sollte insgesamt 5 Gew.-% nicht übersteigen, Beispielsweise können 0,1 bis 2 Gew.-%, insbesondere 0,5 bis 1 Gew.-% Aminosäuren beigemischt werden. Die Glycinmenge sollte 5 Gew.-% nicht übersteigen. Beispielsweise können 0,1 bis 2 Gew.-%, insbesondere 0,5 bis 1 Gew.-% Glycin beigemischt werden.

Durch die Wärmebehandlung wird das Tierfutter sterilisiert. Zudem verändert sich die Stärke vorteilhaft, so dass das Tierfutter eine zähflüssige, Ketchup-ähnliche Konsistenz erhält. Insbesondere kann das Tierfutter durch die Stärke thixotrop werden, also eine zunächst hohe Viskosität haben, die sich bei Krafteinwirkung reduziert.

Die Stärke wirkt vorteilhaft als Verdickungsmittel. Insbesondere Maisstärke ist nach Erhitzen ein wirksames Hydrokolloid, so dass sich eine vorteilhaft zähflüssige Konsistenz ergibt. Weiter mögliche Hydrokolloide sind beispielsweise Guarkernmehl, Caragene, Xanthan, Johannisbrotkernmehl und/oder Natriumcarboxymethylzellulose. Das Tierfutter hat einen Fettgehalt von 2 bis 5 Gew.-%, einen Hydrokolloidgehalt, insbesondere einen Stärkegehalt, von 0,5 bis 6 Gew.-%, bevorzugt 3 bis 6 Gew.-%, einen Proteingehalt von 1 bis 5 Gew.-% und einen Wassergehalt von mindestens 80 Gew.-%, bevorzugt mindestens 85 Gew.-%.

Die Mischung wird portionsweise in Schlauchbeuteln verpackt und anschließend auf 90°C bis 130°C erhitzt. Ein Ausführungsbeispiel eines Schlauchbeutels ist in Figur 1 dargestellt. Für Katzen enthält ein Schlauchbeutel beispielsweise 12 bis 18 g, für Hunde beispielsweise 20 bis 30 g.

Die Schlauchbeutel haben bevorzugt eine Länge, die mindestens dem fünffachen ihrer Breite entspricht. Beispielsweise können die Schlauchbeutel 7 bis 10 mal so lang wie breit sein. Bevorzugt haben die Schlauchbeutel eine Länge von 160 mm bis 180 mm, besonders bevorzugt 165 mm bis 175 mm.

Der in Figur 1 dargestellt Schlauchbeutel 1 ist an seinen beiden Enden verschweißt, indem seine Ober- und Unterseite im Beriech von Schweißflächen 2 und 4 miteinander verschweißt sind. Die Schweißfläche 2 am vorderen Ende des Beutels ist mit einer Sollbruchstelle 3, beispielsweise einem Einschnitt oder einer Perforation versehen, um das Aufreisen des Beutels 1 zu erleichtern. Die Schweißfläche 2 ist auf der den Einschnitt 3 aufweisenden Seite, in der Zeichnung ist das die rechte Seite, zu dem hinteren Ende hin verlängert, bevorzugt durch einen bogenförmig begrenzten Bereich, der auf einer Seite an einen streifenförmigen Bereich anschließt. Der Abstand zwischen dem Einschnitt 3 und dem vorderen Ende des Beutels 1 ist dabei größer als die in Längsrichtung des Beutels gemessene Breite der Schweißfläche 2 auf der dem Einschnitt 3 gegenüberliegenden Seite. Auf diese Weise wird bei einem Aufreisen des Beutels 1 dieser nur auf einem Teil seiner Breite geöffnet, bevorzugt auf weniger als der Hälfte seiner Breite.

In Kombination mit der zähflüssigen, sämigen Konsistenz des Tierfutters führt diese Maßnahme dazu, dass Tierfutter aus einem aufgerissenen Beutel nur langsam austreten kann. Vorteilhaft wird auf diese Weise der Gefahr einer Verschmutzung durch unkontrolliert austretendes Tierfutter entgegengewirkt. Um das Tierfutter aus dem Beutel zu nehmen, kann mit Daumen und Zeigefinger auf die Ober- bzw. Unterseite gedrückt werden und vom hinteren Beutelende zum vorderen Beutelende gestrichen werden.

Die Schweißfläche 4 am hinteren Beutelende ist bevorzugt mindestens 5 mm, besonders bevorzugt mindestens 6 mm breit, insbesondere mindestens 7 mm breit. Die Breite ist dabei in Längsrichtung des Beutels 1 zu messen. Vorteilhaft lässt sich der Beutel zum Ausstreichen des Inhalts an der breiten Schweißfläche leicht greifen. Die Schweißfläche 4 verbreitert sich zu ihren seitlichen Rändern hin. Auf diese Weise lässt sich der Beutel leichter vollständig entleeren.

Der Beutel 1 ist aus einer beschichteten Metallfolie, beispielsweise einer beschichteten Aluminiumfolie hergestellt. Bevorzugt ist die Metallfolie beidseitig mit Kunststoff beschichtet, beispielsweise mit Polyethylen oder Polyethlyenerephtalat. Bei dem dargestellten Ausführungsbeispiel ist der Beutel aus Aluminiumfolie, die auf einer Seite mit Polyethylen und auf der andere Seite Polyethlyenerephtalat beschichtet ist. Die Schlauchbeutel werden in Schachteln verpackt. Bevorzugt werden in einer Schachtel 5 bis 12 Schlauchbeutel verpackt. Bevorzugt werden Pappschachteln verwendet. Die Schachteln haben bevorzugt eine Breite zwischen 9 und 10 cm. Die Länge der Schachteln beträgt bevorzugt 17 bis 19 cm, besonders bevorzugt 17,5 cm bis 18,5 cm. In derartigen Schachteln kann das Tierfutter vorteilhaft in praktischen Mengen vertrieben und ansprechend präsentiert werden.

## Patentansprüche

1. Tierfutter für Hund oder Katze auf Basis von püriertem tierischem Gewebe, Wasser und einem Hydrokolloid als Verdickungsmittel, wobei das Tierfutter
einen Wassergehalt von mindestens 80 Gew.-%, vorzugsweise mindestens 85 Gew.-%, hat,
einen Fettgehalt von mindestens 1 Gew. % und weniger als 5 Gew.-% hat, und einen Stärkegehalt von weniger als 7 Gew.-% hat,
**dadurch gekennzeichnet, dass**
das Tierfutter bei Raumtemperatur flüssig ist,
thixotrop ist,
einen Proteingehalt von 1 bis 5 Gew.-% hat, und
in einem Schlauchbeutel (1) verpackt ist, wobei an einem vorderen und einem hinteren Ende des Schlauchbeutels (1) seine Oberseite und seine Unterseite auf einer Schweißfläche (2, 4) verschweißt sind und in der der Schweißflächen (2) am vorderen Ende eine Sollbruchstelle (3) zum Aufreißen des Beutels (1) ist,
wobei das Hydrokolloid glutenfreie Stärke ist.

2. Tierfutter nach Anspruch 1, **dadurch gekennzeichnet, dass** das Tierfutter einen Nährwert von weniger als 1 kcal, vorzugsweise weniger als 0,7 kcal, insbesondere weniger als 0,5 kcal, pro Gramm hat.

3. Tierfutter nach einem der vorstehenden Ansprüche, **dadurch gekennzeichnet, dass** die Schweißfläche (2) auf der die Sollbruchstelle (3) aufweisenden Seite zu dem hinteren Ende hin verlängert ist.

4. Tierfutter nach einem der vorstehenden Ansprüche, **dadurch gekennzeichnet, dass** sich die Schweißfläche (4) an dem von der Sollbruchstelle (3) abgewandten Ende des Beutels (1) zu ihren Rändern hin verbreitert.

5. Tierfutter nach einem der vorstehenden Ansprüche, **dadurch gekennzeichnet, dass** es einen Fettgehalt von weniger als 3 Gew.-%, **hat.**

6. Tierfutter nach einem der vorstehenden Ansprüche, **dadurch gekennzeichnet, dass** es einen Fettgehalt von mindestens 2 Gew.-%, hat.

7. Tierfutter nach einem der vorstehenden Ansprüche, **dadurch gekennzeichnet, dass** der Hydrokolloidgehalt weniger als 7 Gew.-%, vorzugsweise 0,5 bis 6 Gew.-%, beträgt.

8. Tierfutter nach einem der vorstehenden Ansprüche, **dadurch gekennzeichnet, dass** es einen Süßstoff enthält.

9. Tierfutter nach einem der vorstehenden Ansprüche, **dadurch gekennzeichnet, dass** es Xylose enthält.

10. Tierfutter nach einem der vorstehenden Ansprüche, **dadurch gekennzeichnet, dass** es Glycin enthält.

11. Tierfutter nach einem der vorstehenden Ansprüche, **dadurch gekennzeichnet, dass** es bei Raumtemperatur zähflüssig ist.

12. Tierfutter nach einem der vorstehenden Ansprüche, **dadurch gekennzeichnet, dass** es in Portionen von 10 g bis 30 g verpackt ist.

13. Tierfutter nach einem der vorstehenden Ansprüche, **dadurch gekennzeichnet, dass** der Schlauchbeutel (1) eine Länge hat, die mindestens das Fünffache, insbesondere mindestens das Siebenfache seiner Breite beträgt.

## Claims

1. An animal feed for dogs or cats based on animal tissue, water and a hydrocolloid as a thickening agent, wherein the animal feed has a water content of at least 80 wt%, preferably at least 85 wt%,
a fat content of at least 1 wt% and less than 5 wt%, and
a starch content of less than 7 wt%,
**characterized in that**
the animal feed is liquid at room temperature,
is thixotropic,
has a protein content of 1 wt% to 5 wt%, and
is packaged inside a tubular pouch (1), wherein at a front end and a rear end of the tubular pouch (1), the upper side and lower side thereof are fused at a welding area (2, 4), and in the welding area (2) at the front end, a predetermined breaking point (3) for tearing open the pouch (1) is provided,
wherein the hydrocolloid is a gluten-free starch.

2. The animal feed according to claim 1, **characterized in that** the animal feed has a nutritional value of less than 1 kcal, preferably less than 0.7 kcal, more particularly, less than 0.5 kcal per gram.

3. The animal feed according to any one of the preceding claims, **characterized in that** the welding area (2) is extended toward the rear end on the side that has the predetermined breaking point (3).

4. The animal feed according to any one of the preceding claims, **characterized in that** the welding area (4) is widened toward its sides at the end of the pouch (1) that faces away from the predetermined breaking point (3).

5. The animal feed according to any one of the preceding claims, **characterized in that** it has a fat content of less than 3 wt%.

6. The animal feed according to any one of the preceding claims, **characterized in that** it has a fat content of at least 2 wt%.

7. The animal feed according to any one of the preceding claims, **characterized in that** the hydrocolloid content is less than 7 wt%, preferably 0.5 wt% to 6 wt%.

8. The animal feed according to any one of the preceding claims, **characterized in that** it contains a non-nutritive sweetener.

9. The animal feed according to any one of the preceding claims, **characterized in that** it contains xylose.

10. The animal feed according to any one of the preceding claims, **characterized in that** it contains glycine.

11. The animal feed according to any one of the preceding claims, **characterized in that** it is viscous at room temperature.

12. The animal feed according to any one of the preceding claims, **characterized in that** it is packaged in portions of 10 g to 30 g.

13. The animal feed according to any one of the preceding claims, **characterized in that** the length of the tubular pouch (1) is at least five times, more particularly, at least seven times, its width.

## Revendications

1. Aliment pour animaux destiné au chien ou au chat à base de tissus animaux réduits en purée, d'eau et d'un hydrocolloïde en tant qu'agent épaississant, où l'aliment pour animaux a une teneur en eau d'au moins 80 % en poids, de préférence, d'au moins 85 % en poids,
a une teneur en matière grasse d'au moins 1 % en poids et de moins de 5 % en poids, et a une teneur en amidon de moins de 7 % en poids,
**caractérisé en ce que**
l'aliment pour animaux est liquide à la température ambiante,
est thixotrope,
a une teneur en protéines de 1 à 5 % en poids, et
est emballé dans un sachet tubulaire (1), où le côté supérieur et son côté inférieur au niveau d'une extrémité avant et d'une extrémité arrière du sachet tubulaire (1) sont soudés et qu'il y a un point de rupture souhaité (3) dans les surfaces de soudure (2) à l'extrémité avant pour une ouverture par déchirure du sachet (2), où l'hydrocolloïde est un amidon exempt de gluten.

2. Aliment pour animaux selon la revendication 1, **caractérisé en ce que** l'aliment pour animaux a une valeur nutritionnelle de moins d'1 Kcal, de préférence de moins de 0,7 Kcal, notamment moins de 0,5 kcal par gramme.

3. Aliment pour animaux selon l'une des revendications précédentes, **caractérisé en ce que** la surface de soudure (2) est prolongée vers l'extrémité arrière sur la face présentant le point de rupture souhaité (3).

4. Aliment pour animaux selon l'une des revendications précédentes, **caractérisé en ce que** la surface de soudure (4) s'élargit vers ses bords au niveau de l'extrémité du sachet (1) opposée au point de rupture souhaité (3).

5. Aliment pour animaux selon l'une des revendications précédentes, **caractérisé en ce qu'il** a une teneur en matière grasse de moins de 3 % en poids.

6. Aliment pour animaux selon l'une des revendications précédentes, **caractérisé en ce qu**'il a une teneur en matière grasse d'au moins 2 % en poids.

7. Aliment pour animaux selon l'une des revendications précédentes, **caractérisé en ce que** la teneur en hydrocolloïde s'élève à moins de 7 % en poids, de préférence, de 0,5 à 6 % en poids.

8. Aliment pour animaux selon l'une des revendications précédentes, **caractérisé en ce qu**'il contient un édulcorant.

9. Aliment pour animaux selon l'une des revendications précédentes, **caractérisé en ce qu**'il contient du xylose.

10. Aliment pour animaux selon l'une des revendications précédentes, **caractérisé en ce qu'**il contient de la glycine.

11. Aliment pour animaux selon l'une des revendications précédentes, **caractérisé en ce qu**'il est visqueux à la température ambiante.

12. Aliment pour animaux selon l'une des revendications précédentes, **caractérisé en ce qu**'il est emballé sous forme de portions de 10 g à 30 g.

13. Aliment pour animaux selon l'une des revendications précédentes, **caractérisé en ce que** le sachet tubulaire (1) a une longueur qui correspond à au moins cinq fois, notamment à au moins sept fois, à sa largeur.
